# DEMANDE DE BREVET EUROPEEN

(11) **EP 1 285 713 A1**
(43) Date de publication de la demande: **26.02.2003**
(21) Numéro de dépôt: 02291749.6
(22) Date de dépôt: 11.07.2002
(51) Int. Cl.: B23B 51/00, B23C 5/10, B23C 5/28, B23B 51/06

(54) **Outil de coupe rotatif et procédé de lubrification**

(30) Priorité: 13.07.2001 FR 0109372
(71) Demandeur: AIRBUS FRANCE, 31060 Toulouse Cedex 03 (FR)
(72) Inventeur: Toublanc, Yves, 44240 La Chapelle sur Erdre (FR)
(74) Mandataire: Poulin, Gérard

(57) **Abrégé**

Outil de coupe rotatif, notamment pour usinage grande vitesse avec nano lubrification.

Le lubrifiant est amené jusqu'à la surface d'extrémité de la partie coupante (12) de l'outil par un canal central de lubrification (22) percé selon l'axe de rotation (10) de l'outil, dont une extrémité non débouchante, située à proximité immédiate de la surface d'extrémité, est reliée à celle-ci par des canaux secondaires (24) débouchant à proximité de chaque arête de coupe en bout (20). Des paramètres de coupe concernant notamment l'angle de creux en bout, la largeur de dépouille en bout et la largeur du témoin cylindrique de chaque arête de coupe améliore encore la qualité du travail effectué.

## Description

### Domaine technique

L'invention concerne un outil de coupe rotatif, conçu notamment pour réaliser le perçage direct d'un alésage, en pleine matière, la finition ou la rectification d'un alésage existant, ou encore un usinage planétaire.

L'invention concerne également un procédé d'usinage à grande vitesse, avec de la nano lubrification, utilisant un outil de coupe selon l'invention.

Toutefois, ces conditions de travail ne sont pas limitatives. Ainsi, l'outil de coupe selon l'invention peut aussi être utilisé pour effectuer des usinages avec une lubrification par de l'huile de coupe en émulsion ou par micro pulvérisation, ou encore avec une circulation d'air comprimé afin de refroidir la surface de coupe.

### Etat de la technique

De façon connue, un outil de coupe rotatif comprend successivement, selon sa longueur, une partie coupante de diamètre d et de longueur Lᵤ (longueur utile de coupe), une partie de dégagement de diamètre d₁<d et une queue de diamètre d_{Q}, permettant la fixation de l'outil sur la machine.

La partie coupante de l'outil comporte au moins une arête de coupe latérale, taillée en hélice selon un angle d'hélice He. Chaque arête de coupe latérale est constituée d'un témoin cylindrique, de faible largeur, suivi d'une première dépouille latérale et d'au moins une deuxième dépouille latérale, parfois appelée contre dépouille latérale. La dernière dépouille latérale est suivie d'une goujure qui permet l'évacuation des copeaux.

La partie coupante de l'outil comporte aussi autant d'arêtes de coupe en bout qu'il existe d'arêtes de coupe latérales. Chaque arête de coupe en bout est constituée d'une première dépouille en bout suivie d'au moins une deuxième dépouille en bout, parfois appelée contre dépouille en bout.

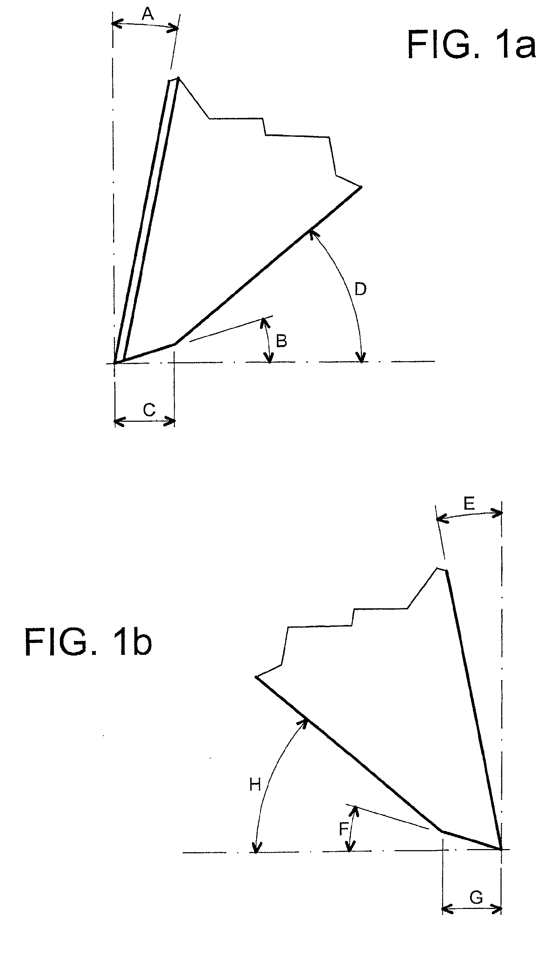

De façon connue et comme on l'a illustré schématiquement sur les figures 1a et 1b des dessins annexés, on caractérise les arêtes de coupe d'un outil de coupe rotatif par un certain nombre de paramètres. Parmi ces paramètres, on a représenté sur la figure 1a l'angle de coupe en bout A, l'angle de dépouille en bout B, la largeur de dépouille en bout C et l'angle de contre dépouille en bout D. Sur la figure 1b, on a représenté l'angle de coupe latéral E, l'angle de dépouille latéral F, la largeur de dépouille latérale G et l'angle de contre dépouille latérale H.

Un autre paramètre, non illustré sur les figures 1a et 1b, est l'angle de creux. Cet angle est défini comme étant l'angle entre l'arête de coupe en bout et un plan orthogonal à l'axe de rotation de l'outil.

A titre d'exemple, dans le cas d'un outil de coupe classique utilisé en usinage à grande vitesse avec micro pulvérisation, l'angle d'hélice peut être de 17°, l'angle de coupe en bout de 10°, l'angle de dépouille en bout de 9° et la longueur utile de coupe égale à 0,5 d, d étant le diamètre de coupe.

Parmi les outils de coupe rotatifs, certains sont conçus pour être utilisés en usinage à grande vitesse. Parmi ces outils, on citera à titre d'exemple ceux fabriqués par la Société DIAGER sous les références 41.001 et 46.201. De tels outils ont une ou plusieurs arêtes de coupe et comportent autant de canaux hélicoïdaux de lubrification, enroulés autour de leur axe de rotation, qu'ils ont d'arêtes de coupe. Ils sont prévus pour être utilisés avec une lubrification par une émulsion d'huile de coupe ou par micro pulvérisation de gouttelettes d'huile de dimensions de l'ordre de quelques microns.

Une telle lubrification pose des problèmes, liés notamment à la quantité importante de lubrifiant qu'elle conduit à utiliser.

Un premier problème concerne la nécessité de dégraisser ultérieurement les pièces usinées. Cette opération est coûteuse. De plus, il convient de prendre en compte son impact sur l'environnement. En effet, le dégraissage des pièces est fréquemment réalisé au moyen de solvants, dont l'utilisation est réglementée de plus en plus sévèrement.

Un deuxième problème lié à l'utilisation de quantités importantes de lubrifiant est relatif au surcoût qui en résulte, du fait du prix dudit lubrifiant.

Un autre problème concerne la pollution de l'atmosphère de l'atelier. En effet, cette pollution peut entraîner des risques d'allergies pour les personnels travaillant dans cet atelier.

Encore un autre problème concerne la nécessité de détruire une quantité importante de lubrifiant usagé, ce qui est pénalisant, d'une part, en raison du coût de destruction et, d'autre part, en raison des rejets qu'elle entraîne dans l'environnement.

Il est possible de réduire fortement la quantité de lubrifiant employé en remplaçant la micro pulvérisation par la nano pulvérisation. Cette technique consiste à pulvériser des gouttelettes d'huile de dimensions de l'ordre de quelques nanomètres. Elle est parfois mise en oeuvre au moyen d'une buse qui pulvérise le lubrifiant sur la surface usinée ou à proximité immédiate de celle-ci.

Toutefois, cette technique est difficile à mettre en oeuvre dans le cas de trous profonds tels que ceux qui peuvent être usinés au moyen d'outils de coupe équipés de canaux de lubrification hélicoïdaux, par exemple les outils DIAGER cités précédemment.

Ainsi, des essais effectués en remplaçant la micro pulvérisation par de la nano pulvérisation, dans les canaux hélicoïdaux de lubrification des outils précités, ont conduit à des trous de mauvaise qualité et/ou à la cassure des outils.

Ces problèmes ont pour origine une lubrification quasi nulle de la surface de coupe, due au fait que les gouttelettes d'huile ne parviennent pas à sortir correctement des canaux de lubrification. En effet, du fait que ces derniers sont hélicoïdaux et donc décalés par rapport à l'axe de rotation de l'outil, lorsque celui-ci tourne à grande vitesse, les nano gouttelettes d'huile sont soumises à des forces centrifuges importantes (radiales par rapport à l'axe de rotation). Ces forces centrifuges plaquent les nano gouttelettes contre les parois des canaux de lubrification, où elles se condensent. Par conséquent, l'avance des nano gouttelettes vers la surface de coupe, dans le sens de l'axe de rotation de l'outil, est rendue négligeable. La surface de coupe n'est donc pas lubrifiée correctement. De plus, après un certain temps d'utilisation de l'outil, les gouttelettes condensées peuvent arriver à obturer les canaux de lubrification.

Enfin, le document US-A-5 429 459 décrit un outil de coupe rotatif permettant de percer un trou dans une pièce, puis d'aléser ce trou en effectuant un mouvement orbital. L'outil comporte à son extrémité deux arêtes de coupe en bout formant entre elles une pointe en forme de V. Un fluide sous pression, destiné à l'évacuation des copeaux hors du trou, est injecté dans l'outil par un canal central prolongé par deux canaux inclinés qui débouchent à l'extrémité de l'outil, derrière les deux arêtes de coupe en bout.

### Exposé de l'invention

L'invention a précisément pour objet un outil de coupe rotatif dont la conception originale lui permet notamment de réaliser des usinages à grande vitesse avec une nano lubrification, en assurant des caractéristiques de finition correctes et un risque très réduit de cassure de l'outil.

Conformément à l'invention, ce résultat est obtenu au moyen d'un outil de coupe rotatif comprenant une partie coupante centrée sur un axe de rotation de l'outil et comportant une surface latérale dotée d'au moins une arête de coupe latérale et une surface d'extrémité dotée d'au moins une arête de coupe en bout, des moyens d'amenée de fluide étant prévus pour amener le fluide sur la surface d'extrémité, à proximité de chaque arête de coupe en bout, les moyens d'amenée de lubrifiant comprenant un canal central de lubrification percé selon l'axe de rotation de l'outil et au moins un canal secondaire reliant une extrémité non débouchante du canal central à la surface d'extrémité, à proximité de chaque arête de coupe en bout, caractérisé en ce que l'arête de coupe en bout forme, avec un plan perpendiculaire à l'axe de rotation de l'outil, un angle de creux en bout compris entre environ 3° et environ 20°.

L'amenée de nano goutelettes de lubrifiant par un canal central de lubrification percé selon l'axe de rotation de l'outil permet de réaliser un canal de diamètre suffisant, sans affaiblir notablement la solidité de l'outil et en limitant les forces centrifuges appliquées sur les nano gouttelettes de lubrifiant. De plus, du fait que le canal central de lubrification est centré sur l'axe de rotation de l'outil, il n'introduit pas de balourd.

Afin de limiter au maximum le phénomène de centrifugation des gouttelettes d'huile, l'extrémité non débouchante du canal central est avantageusement située à proximité immédiate de la surface d'extrémité de la partie coupante. En d'autres termes, la longueur des canaux secondaires est la plus faible possible.

Afin de limiter les pertes de charge, les canaux secondaires présentent, de préférence, des sections dont la somme est au moins égale à la section du canal central.

Chaque arête de coupe en bout comprenant, de façon habituelle, une première dépouille en bout et au moins une dépouille secondaire en bout, chacun des canaux secondaires débouche avantageusement dans ladite dépouille secondaire, à une distance d'au moins 0,5 mm de la première dépouille en bout.

On utilise de préférence un outil dans lequel l'angle de creux en bout est sensiblement égal à 6°.

Pour des raisons comparables, chaque arête de coupe latérale comprend avantageusement un témoin cylindrique de largeur non nulle, inférieure à 0,1 mm.

Afin d'améliorer encore la qualité des usinages, chaque arête de coupe en bout comprend de préférence une première dépouille en bout de largeur comprise entre 0,3 mm et 0,4 mm. Avantageusement, cette largeur est sensiblement égale à 0,3 mm.

De façon habituelle, l'outil comprend successivement, au-delà de la partie coupante et selon l'axe de rotation de l'outil, une partie de dégagement de diamètre d₁ et une partie de queue de diamètre d_{Q}. Pour ne pas fragiliser l'outil, ces deux parties sont avantageusement raccordées l'une à l'autre selon un rayon de raccordement R_{R} au moins égal à (d_{Q}-d₁)/2, avec un minimum de 0,1 d_{Q}.

Pour des raisons similaires, les arêtes de coupe latérale et en bout sont avantageusement raccordées entre elles par un arrondi ou un chanfrein de 0,1 mm orienté à 45° par rapport à l'axe de rotation de l'outil.

L'invention concerne également un procédé de coupe utilisant un outil de coupe rotatif tel que défini ci-dessus. Ce procédé consiste à usiner un alésage dans une pièce par un mouvement de rotation de l'outil autour de son axe et un mouvement d'avance de l'outil selon ledit axe, tout en injectant par le canal central et par le canal secondaire un fluide constitué de nano gouttelettes de lubrifiant.

### Brève description des dessins

On décrira à présent, à titre d'exemple illustratif et non limitatif, un mode de réalisation préféré de l'invention, en se référant aux dessins annexés, dans lesquels :
- les figures 1a et 1b, déjà décrites, montrent les principaux paramètres de coupe, respectivement en bout et latérale, caractérisant les arêtes de coupe d'un outil de coupe ;
- la figure 2 est une vue en bout d'un outil de coupe conforme à l'invention ; et
- les figures 3a et 3b sont des vues de côté de l'outil de coupe selon l'invention, prises respectivement dans le sens des flèches FA et FB sur la figure 2, décalées entre elles de 90° autour de l'axe de rotation de l'outil.

### Description détaillée d'un mode de réalisation préféré de l'invention

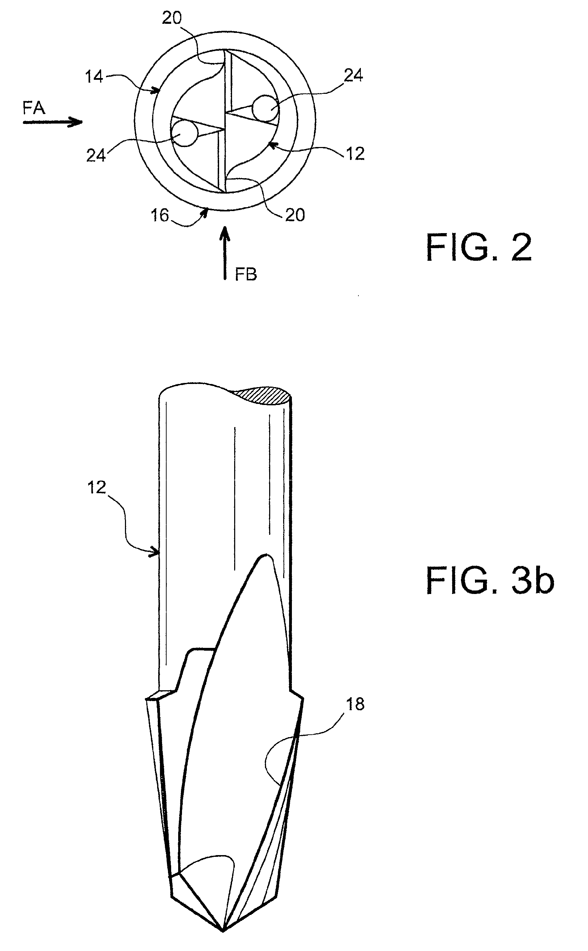

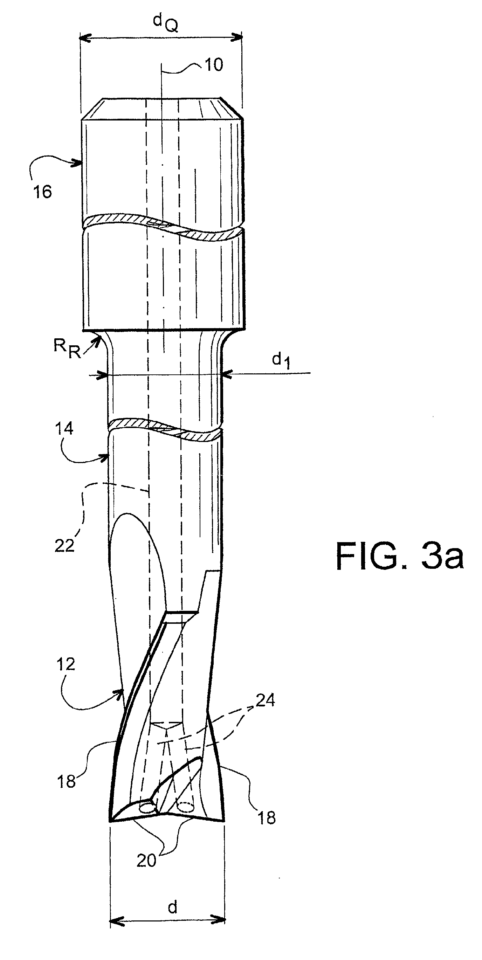

Comme on l'a représenté sur les figures 2, 3a et 3b, un outil de coupe rotatif conforme à l'invention comprend, de façon connue, trois parties distinctes réparties selon sa longueur, c'est-à-dire le long d'un axe de rotation 10 de l'outil.

En partant de l'extrémité de coupe de l'outil, ces trois parties comprennent une partie coupante 12, une partie de dégagement 14 et une partie de queue 16.

La partie coupante 12 présente un diamètre d, appelé "diamètre de coupe" et une longueur Lᵤ, appelée "longueur utile de coupe".

La partie de dégagement 14 présente un diamètre d₁ tel que d₁<d, afin que la surface de cette partie de dégagement ne frotte pas sur la surface déjà usinée. Toutefois, le diamètre d₁ ne doit pas être trop faible, afin que l'outil conserve une rigidité suffisante.

Enfin, la partie de queue 16 de l'outil présente un diamètre d_{Q}. Ce diamètre permet l'attachement de l'outil sur la machine. Il est fonction des diamètres admissibles par la machine.

Dans le mode de réalisation préféré de l'invention illustré sur la figure 3a, la partie de dégagement 14 et la partie de queue 16 sont raccordées l'une à l'autre selon un rayon de raccordement R_{R} au moins égal à (d_{Q}-d₁)/2. De plus, la valeur minimale de ce rayon de raccordement R_{R} est de 0,1 d_{Q}. Ces caractéristiques permettent de ne pas fragiliser l'outil à la limite entre la partie de queue 16 et la partie de dégagement 14.

Pour des raisons similaires, dans le mode de réalisation préféré de l'invention illustré sur les figures 3a et 3b, la partie de dégagement 14 et la partie coupante 12 de l'outil sont raccordées l'une à l'autre par un chanfrein (non représenté) formant un angle d'environ 30° par rapport à l'axe de rotation 10 de l'outil. L'utilisation d'un rayon de raccordement est exclue, du fait qu'il s'agit d'une partie taillée de l'outil.

De façon connue, la partie coupante 12 de l'outil comporte une surface latérale ou périphérique dotée d'au moins une arête de coupe latérale 18 (deux sur les figures 2, 3a et 3b) et une surface d'extrémité dotée d'autant d'arêtes de coupe en bout 20 que ladite partie coupante 12 comporte d'arêtes de coupe latérale. Plus précisément, chaque arête de coupe en bout 20 est raccordée sur une arête de coupe latérale 18.

Dans le mode de réalisation préféré de l'invention, ce raccordement est assuré par un arrondi ou un chanfrein (non représenté) de 0,1 mm, orienté à environ 45° par rapport à l'axe de rotation 10 de l'outil. Cette caractéristique permet de ne pas trop fragiliser l'outil.

Selon une caractéristique essentielle de l'invention, l'outil de coupe rotatif illustré sur les figures 2, 3a et 3b comprend des moyens d'amenée de lubrifiant de conception originale, conçus pour permettre une utilisation de la nano lubrification en usinage à grande vitesse.

De façon plus précise, ces moyens d'amenée de lubrifiant comprennent un canal central de lubrification 22, percé selon l'axe de rotation 10 de l'outil, de façon à ne pas déboucher sur la surface d'extrémité de la partie coupante 12.

Les moyens d'amenée de lubrifiant comprennent également autant de canaux secondaires 24 qu'il existe d'arêtes de coupe en bout 20. Plus précisément, chaque canal secondaire 24 relie l'extrémité non débouchante du canal central de lubrification 22 à la surface d'extrémité de la partie coupante 12, de façon à déboucher à proximité de chacune des arêtes de coupe en bout 20.

L'extrémité non débouchante du canal central de lubrification 22 est située à proximité immédiate de la surface d'extrémité de la partie coupante 12 de l'outil. Cette caractéristique permet de donner aux canaux secondaires 24 une longueur la plus faible possible, afin de limiter au maximum le phénomène de centrifugation des gouttelettes de lubrifiant.

Dans l'agencement qui vient d'être décrit, le canal central de lubrification 22 présente l'avantage de ne pas introduire de balourd puisqu'il est centré sur l'axe de rotation 10 de l'outil. De plus, cette position centrale permet de réaliser un canal de diamètre suffisant sans affaiblir notablement la solidité de l'outil et limite les forces centrifuges appliquées sur les nano gouttelettes.

La section du canal central de lubrification 22 est avantageusement fixée à une valeur suffisamment élevée afin de limiter les pertes de charge lorsque le lubrifiant circule dans le canal central 22 pour atteindre les canaux secondaires 24. De préférence, la somme des sections des canaux secondaires 24 est au moins égale et, de préférence, supérieure à la section du canal central 22. Dans le cas contraire, on donne à la somme des sections des canaux secondaires 24 une valeur aussi élevée que possible.

Afin d'améliorer encore la qualité des usinages à grande vitesse en présence d'une nano lubrification, on associe de préférence à ces caractéristiques concernant les moyens d'amenée de lubrifiant des caractéristiques concernant les paramètres de taille de l'outil. En effet, la présence d'un canal central prolongé par des canaux secondaires conformément à l'invention peut s'avérer insuffisante, dans certains cas, pour réaliser un usinage présentant la qualité souhaitée. Cela s'explique par le fait que, selon la forme géométrique des outils, il peut se produire des vibrations, des frottements, etc. qui peuvent avoir pour conséquences une moindre qualité du trou usiné (tolérances sur le diamètre, état de surface, etc.), une rupture de l'outil ou une usure prématurée de celui-ci, des efforts excessifs sur la tête de broche supportant l'outil, etc..

Afin de s'affranchir de ces problèmes, l'outil selon l'invention est taillé avantageusement selon des paramètres préférentiels qui vont à présent être exposés.

Un premier de ces paramètres concerne l'angle de creux en bout, formé entre l'arête de coupe en bout 20 et un plan perpendiculaire à l'axe de rotation 10 de l'outil. Les valeurs minimale et maximale de cet angle sont de 3° et de 20°, respectivement. La valeur optimale de l'angle de creux en bout est de 6°.

Un autre paramètre important est la largeur de dépouille en bout C (figure 1a), c'est-à-dire la largeur de la première dépouille en bout, observée dans un plan perpendiculaire à l'axe de rotation 10 de l'outil, c'est-à-dire dans le plan de la figure 2. Cette largeur est, de préférence, comprise entre une valeur minimale égale à 0,3 mm et une valeur maximale égale à 0,4 mm. La valeur optimale de la largeur de dépouille en bout est de 0,3 mm.

Un troisième paramètre préférentiel concerne la largeur du témoin cylindrique de chaque arête de coupe latérale 18. Cette valeur est comprise entre une valeur minimale quelconque non nulle et une valeur maximale égale à 0,1 mm. En effet, en l'absence de témoin cylindrique on fragilise l'arête de coupe et pour des valeurs supérieures à 0,1 mm, il y a trop de frottements sur la surface usinée, ce qui peut entraîner des vibrations.

Les autres paramètres de taille de l'outil ont moins de conséquences sur la qualité du travail effectué par l'outil. Ainsi, les paramètres concernant les contre dépouilles peuvent varier dans les plages communément admises et pratiquées.

Les valeurs minimales et maximales de l'ensemble des paramètres de coupe, ainsi que leurs valeurs optimales, sont données dans le tableau suivant :

| Paramètre | Valeur minimale | Valeur optimale | Valeur maximale |
|---|---|---|---|
| Largeur du témoin cylindrique | >0 | Non spécifiée | 0,1 mm |
| Largeur de dépouille en bout | 0,3 mm | 0,3 mm | 0,4 mm |
| Angle de creux en bout | 3° | 6° | 20° |
| Angle de coupe en bout | 3° | 10° | 30° |
| Angle de 1^{ère} dépouille en bout | 4° | 15° | 30° |
| Angle de 2^{ème} dépouille en bout | Non spécifié | 30° | Non spécifié |
| Angle de coupe latérale | 3° | 10° | 20° |
| Angle de 1^{ère} dépouille latérale | 5° | 12°(+0°;-2°) | 20° |
| Angle de l'hélice | 12° | 25° | 40° |
| Longueur de coupe | 0,25d | | 2d |

Dans ce tableau, les valeurs minimale et maximale sont données pour une variation du seul paramètre considéré par rapport à sa valeur optimale ou nominale et non pour des variations simultanées de l'ensemble des paramètres. En outre, sauf spécification contraire, des tolérances de +/- 1° sont à prévoir sur les valeurs des angles.

Comme on l'a indiqué précédemment, chaque canal secondaire 24 débouche sur la surface d'extrémité de la partie coupante 12 de l'outil, à proximité de l'arête de coupe en bout 20, de préférence dans l'une des dépouilles secondaires en bout, à une distance d'au moins 0,5 mm de la première dépouille en bout.

Dans le mode de réalisation préféré de l'invention qui vient d'être décrit en se référant aux figures 2, 3a et 3b, l'outil est optimisé de façon à pouvoir travailler en usinage planétaire à grande vitesse, avec une nano lubrification. Plus précisément, les valeurs numériques sont particulièrement adaptées au cas d'un outil en carbure de tungstène destiné à l'usinage de pièces en aluminium.

De manière plus générale, l'invention s'applique à des conditions de travail différentes. Ainsi, les moyens d'amenée de lubrifiant peuvent aussi être utilisés pour effectuer une lubrification avec de l'huile de coupe en émulsion ou par micro pulvérisation. Ils peuvent aussi servir à faire circuler de l'air comprimé afin de refroidir la surface de coupe.

Lorsqu'il est utilisé pour l'usinage grande vitesse avec nano lubrification, l'outil de coupe selon l'invention est monté sur une machine d'usinage orbital du commerce. A titre d'illustration non limitative, cette machine peut entraîner l'outil de coupe en rotation à une grande vitesse d'environ 18000 tours par minute.

Une centrale de lubrification est alors également montée sur la machine d'usinage. La sortie de la centrale de lubrification est reliée au canal central de lubrification de l'outil, par l'intermédiaire du porte-outil de la machine. La centrale de lubrification est alimentée en air comprimé selon une pression réglable. On injecte ainsi dans le canal central de l'outil des goutelettes dont la taille est de l'ordre de quelques nanomètres.

La centrale de lubrification peut notamment être une centrale fabriquée par la Société allemande T.K.M., Sprüh-und-Dosiergeräte gMbH, Koelleskr 29a, 76189 Karlsruhe.

## Revendications

1. Outil de coupe rotatif comprenant une partie coupante (12) centrée sur un axe de rotation (10) de l'outil et comportant une surface latérale dotée d'au moins une arête de coupe latérale (18) et une surface d'extrémité dotée d'au moins une arête de coupe en bout (20), des moyens d'amenée de fluide étant prévus pour amener un fluide sur la surface d'extrémité, à proximité de chaque arête de coupe en bout (20), les moyens d'amenée de fluide comprenant un canal central (22) percé selon l'axe de rotation (10) de l'outil et au moins un canal secondaire (24) reliant une extrémité non débouchante du canal central (22) à la surface d'extrémité, à proximité de chaque arête de coupe en bout (20), **caractérisé en ce que** l'arête de coupe en bout (20) forme, avec un plan perpendiculaire à l'axe de rotation (10) de l'outil, un angle de creux en bout compris entre environ 3° et environ 20°.

2. Outil de coupe rotatif selon la revendication 1, dans lequel l'extrémité non débouchante du canal central (22) est située à proximité immédiate de la surface d'extrémité de la partie coupante (12).

3. Outil de coupe rotatif selon l'une quelconque des revendications 1 et 2, dans lequel les canaux secondaires (24) présentent des sections dont la somme est au moins égale à la section du canal central (22).

4. Outil de coupe rotatif selon l'une quelconque des revendication 1 à 3, dans lequel l'angle de creux en bout est sensiblement égal à 6°.

5. Outil de coupe rotatif selon l'une quelconque des revendications 1 à 4, dans lequel chaque arête de coupe latérale (18) comprend un témoin cylindrique de largeur non nulle, inférieure à 0,1 mm.

6. Outil de coupe rotatif selon l'une quelconque des revendications 1 à 5, dans lequel chaque arête de coupe en bout (20) comprend une première dépouille en bout de largeur comprise entre 0,3 mm et 0,4 mm.

7. Outil de coupe rotatif selon la revendication 6, dans lequel la largeur de la première dépouille est sensiblement égale à 0,3 mm.

8. Outil de coupe rotatif selon l'une quelconque des revendications précédentes, dans lequel ledit outil comprend successivement, au-delà de la partie coupante (12) et selon l'axe de rotation (10) de l'outil, une partie de dégagement (14) de diamètre d₁ et une partie de queue (16) de diamètre d_{Q}, raccordées l'une à l'autre selon un rayon de raccordement R_{R} au moins égal à (d_{Q}-d₁)/2, avec un minimum de 0,1 d_{Q}.

9. Outil de coupe rotatif selon la revendication 8, dans lequel la partie de dégagement (14) et la partie coupante (12) sont raccordées l'une à l'autre selon un angle d'environ 30°.

10. Outil de coupe rotatif selon l'une quelconque des revendications précédentes, dans lequel les arêtes de coupe latérale (18) et en bout (20) sont raccordées entre elles par un arrondi ou un chanfrein de 0,1 mm orienté à 45° par rapport à l'axe de rotation de l'outil.

11. Outil de coupe rotatif selon l'une quelconque des revendications précédentes, dans lequel chaque canal secondaire (24) débouche sur la surface d'extrémité de la partie coupante (12), dans une dépouille secondaire d'une arête de coupe en bout (20), à une distance d'au moins 0,5 mm d'une première dépouille en bout de ladite arête de coupe en bout.

12. Procédé de coupe utilisant un outil de coupe rotatif selon l'une quelconque des revendications précédentes, **caractérisé en ce qu'**il consiste à usiner un alésage dans une pièce par un mouvement de rotation de l'outil autour de son axe et un mouvement d'avance de l'outil selon ledit axe, tout en injectant par le canal central et par le canal secondaire un fluide constitué de nano gouttelettes de lubrifiant.
